# EUROPÄISCHE PATENTANMELDUNG

(11) **EP 1 617 168 A1**
(43) Veröffentlichungstag der Anmeldung: **18.01.2006**
(21) Anmeldenummer: 05013565.6
(22) Anmeldetag: 23.06.2005
(51) Int. Cl.: F42B 15/04, B63G 8/28

(54) **Hydrodynamische Einrichtung an einen Spulenaufschwimmkörper**

(30) Priorität: 15.07.2004 DE 102004034309
(71) Anmelder: LFK-Lenkflugkörpersysteme GmbH, 85716 Unterschleissheim (DE)
(72) Erfinder: Rühe, Jürgen, 81545 München (DE); Roder, Kuno, 85614 Eglharting (DE); Becker, Wilfried, 83052 Bruckmühl (DE); Friedrich, Jeannette, 85386 Eching (DE)
(74) Vertreter: Hummel, Adam

(57) **Zusammenfassung**

Ein Spulenaufschwimmkörper (1) weist eine hydrodynamisch wirksame Einrichtung (11) auf, welche in der Ruheposition in einer hydrodynamisch wenig wirksamen Position am oder im Spulenaufschwimmkörper (1) angeordnet ist und welche ab dem Zeitpunkt der Trennung des Spulenaufschwimmkörpers vom mobilen Wirkkörper (8) in eine hydrodynamisch wirksame Arbeitsposition verbringbar ist.

## Beschreibung

Die Erfindung betrifft eine hydrodynamische Einrichtung für einen unter der Wasseroberfläche befindlichen Spulenaufschwimmkörper, welcher wenigstens eine Lichtwellenleiterspule enthält, wobei das erste Ende des Lichtwellenleiters mit einem Unterwasserfahrzeug verbunden ist und das zweite Ende mit einem sich nach dem Start vom Unterwasserfahrzeug weg bewegenden mobilen Wirkkörper verbunden ist.

Anwendung finden derartige Spulenkörper bei Unterwasserfahrzeugen, insbesondere Unterseebooten, von denen aus mobile Wirkkörper, die in aller Regel über einen eigenen Antrieb verfügen, gestartet werden. Unter mobilen Wirkkörpern wurden bislang Torpedos und ähnliche Geräte verstanden. Aus der WO 03/106914 A1 ist eine vergleichbare Anordnung bekannt geworden. Von einem ersten mobilen Gerät, beispielsweise einem Unterseeboot, wird ein weiteres mobiles Gerät, in diesem Beispiel ein Torpedo, gestartet, wobei sich beide mobile Geräte auf voneinander unabhängigen Kursen unter der Wasseroberfläche bewegen. Die in beide Richtungen wirksame Datenverbindung wird über Lichtwellenleiter vollzogen, wobei zwischen den mobilen Geräten ein Spulenkörper vorgesehen ist, der eine oder zwei Spulen für Lichtwellenleiter enthält. Da hiermit auch größere Entfernungen unter der Wasseroberfläche überbrückt werden können, dient das Konzept auch zur Verschleierung des tatsächlichen Startortes des weiteren mobilen Geräts. Aufgrund der gleichartigen Belastung beider Lichtwellenleiterabschnitte sind beide hinsichtlich der Armierung für den Unterwassereinsatz ausgelegt.

Seit neuerem werden auch Flugkörper entwickelt, die unter der Wasseroberfläche von Unterseebooten oder vergleichbaren Plattformen gestartet werden und nach dem Durchdringen der Wasseroberfläche in ein Luftziel gesteuert werden, wobei die Steuerung des Flugkörpers über eine Entfernung von 10 bis 50 km vorzugsweise mit Hilfe von Lichtwellenleitern abläuft. Um die notwendige Länge der Lichtwellenleiter zur Verfügung zu haben, wird hierbei ein Spulenaufschwimmkörper verwendet. Der Unterschied zur vorgenannten Situation besteht jedoch darin, dass zur Verbindung des ersten mobilen Geräts, beispielsweise eines Unterseebootes, und dem Spulenaufschwimmkörper ein stark armierter Lichtwellenleiter verwendet wird, der die Belastungen des Einsatzes unter der Wasseroberfläche aushält. Für die Verbindung des Spulenaufschwimmkörpers mit dem Flugkörper wird ein relativ zum vorgenannten Lichtwellenleiter dünner Lichtleiter verwendet, um den Anforderungen während des Fluges gerecht zu werden. Der Spulenaufschwimmkörper muss dabei in einem bestimmten Tiefenbereich nahe der Wasseroberfläche gehalten werden. Hierfür ist jedoch bei den bekannten Spulenkörpern nach dem Stand der Technik keine Einrichtung vorgesehen, die zum Einhalten einer bestimmten Wassertiefe über den Zeitbereich vom Start bis zum Erreichen des Zieles geeignet wäre und einen Auftrieb aufweist.

Es ist deshalb Aufgabe der Erfindung, eine einfache Hilfseinrichtung für eine Tiefensteuerung eines Spulenaufschwimmkörpers zu entwickeln, welche nach der Trennung des Spulenaufschwimmkörpers vom mobilen Wirkkörper die Bewegungen des Spulenaufschwimmkörpers im Wasser verzögert.

Die Erfindung wird auf einfache Weise mittels der im Anspruch 1 wiedergegebenen Merkmale gelöst. Vorteilhafte Weiterbildungen der Erfindung sind in den Unteransprüchen wiedergegeben.

Der besondere Vorteil der erfindungsgemäßen hydrodynamischen Einrichtung für einen unter der Wasseroberfläche befindlichen Spulenaufschwimmkörper ist darin zu sehen, dass diese Einrichtung sowohl allein als auch zusammen mit einer Einrichtung zur Tiefensteuerung eines Spulenaufschwimmkörpers die Bewegungen des Spulenaufschwimmkörpers unter Wasser erheblich dämpft und somit dazu beiträgt, dass der gerade gestartete mobile Wirkkörper über die gesamte Länge seiner Lauf- oder Flugzeit problemlos über den sich abrollenden Lichtwellenleiter gesteuert werden kann, ohne dass es zu Störungen oder gar zu einer Unterbrechung der Datenverbindung kommt. Hierfür ist die hydrodynamische Einrichtung in seiner Ruheposition so am oder im Spulenaufschwimmkörper angeordnet, dass die periphere Wasserströmung möglichst wenig beeinträchtigt wird. Erst ab der Trennung des mobilen Wirkkörpers von dem Spulenaufschwimmkörper verändert die hydrodynamische wirksame Einrichtung ihre Position oder Lage derart, dass sie eine spürbare Verzögerung der Bewegungen des Spulenauftriebskörpers bewirkt. Die hydrodynamisch wirksame Einrichtung kann dabei nicht nur ein Element umfassen, sondern es können auch mehrere gleichartige Einrichtungen wirkungsvoll miteinander kombiniert sein.

Der Übergang von der Ruheposition in die Arbeitsposition erfolgt mittels eines Antriebs, der besonders vorteilhaft als eine vorgespannte Feder ausgeführt ist, welche zusammen mit dem am Spulenaufschwimmkörper vorbeiströmenden Wasser den Vorgang unterstützt.

Als besonders vorteilhafte Form hat sich das flächig gestaltete Element herausgestellt, das sich beinahe formschlüssig der Außenfläche des Spulenaufschwimmkörpers anpasst.

Die verzögernde Wirkung des hydrodynamisch wirksames Elements lässt sich mit Hilfe von Bohrungen oder auch Rippen, die deutlich über die Oberfläche herausragen, unterstützen.

Hilfreich ist auch eine Verriegelungsvorrichtung, welche die hydrodynamisch wirksame Einrichtung in der Ruheposition festhält bis diese gezielt in die hydrodynamisch wirksame Arbeitsposition verbracht werden soll.

In vorteilhafter Weise erfolgt der Übergang von der Ruheposition in die Arbeitsposition des hydrodynamisch wirksamen Elements unmittelbar nach der wassertiefenabhängigen Initiierung einer Trennvorrichtung zwischen dem mobilen Wirkkörper und dem Spulenaufschwimmkörper, wobei vorzugsweise eine pyrotechnische Trennvorrichtung Anwendung findet.

Ein Ausführungsbeispiel der Erfindung ist in der Zeichnung schematisch vereinfacht dargestellt und wird im folgenden näher beschrieben. Es zeigen:
- Fig. 1:: einen vereinfachten Schnitt durch einen Spulenaufschwimmkörper mit hydrodynamisch wirksamen Elementen,
- Fig. 2:: die Anordnung mehrerer flächiger hydrodynamisch wirksamer Elemente an der Außenfläche eines Spulenaufschwimmkörpers,
- Fig. 3:: ein einzelnes flächiges Element gemäß Fig. 2 in der Schrägansicht,
- Fig. 4:: einen Spulenaufschwimmkörper kurz nach dem Trennen von einem Flugkörper.

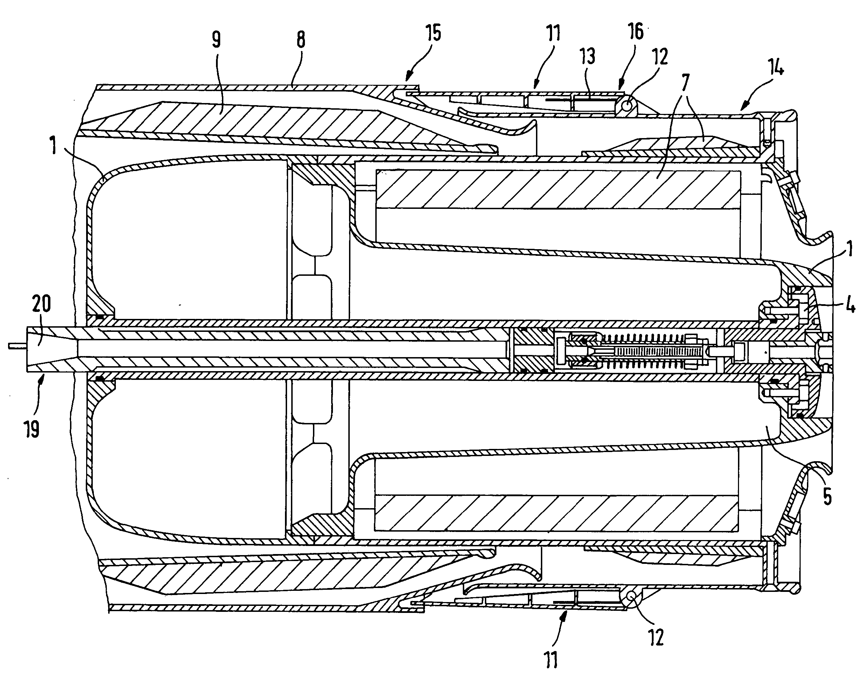

In der Figur 1 ist ein vereinfachter Schnitt durch einen Spulenaufschwimmkörper 1 dargestellt, welcher mit einer erfindungsgemäßen hydrodynamisch wirksamen Einrichtung 11 ausgerüstet ist. Der Spulenaufschwimmkörper 1 ist mit Hilfe mittels eines stabförmigen Elements 19, welches am mobilen Wirkkörper befestigt ist, über eine pyrotechnische Trennvorrichtung 20, die in Abhängigkeit von einer vorwählbaren Wassertiefe auslösbar ist, an einen mobilen Wirkkörper 8 gekoppelt, der eine Lichtleiterspule 9 mit sich führt. Der Spulenaufschwimmkörper selbst ist mit zwei weiteren Lichtleiterspulen 7 ausgerüstet, wobei die größere der beiden Lichtleiterspulen die Verbindung zu dem nicht dargestellten Unterwasserfahrzeug herstellt, von dem aus der mobile Wirkkörper 8 gestartet wurde. Der Spulenaufschwimmkörper 1 weist auch ein Ventil 4 auf, welches nach der Trennung vom mobilen Wirkkörper 8 beim Aufschwimmvorgang in einer wählbaren Tiefe unter der Wasseroberfläche geöffnet wird, so dass der Innenraum 5 des Spulenaufschwimmkörpers 1 geflutet wird.

Sowohl beim Aufschwimmvorgang als auch beim sich daran anschließenden Absinken des Spulenaufschwimmkörpers 1 ist es erwünscht, dass jegliche Bewegung nur stark verzögert erfolgt, um den Spulenaufschwimmkörper möglichst lange in einer bestimmten Bandbreite der Wassertiefe zu halten. Dies ist insbesondere dann erforderlich, wenn es sich bei dem mobilen Wirkkörper 8 um einen unter der Wasseroberfläche startbaren Flugkörper handelt, der anschließend über eine Entfernung von 10 bis zu 50 km ins Ziel gesteuert werden soll. Gemäß der Erfindung wird die erwünschte Verzögerung der Bewegungen des Spulenaufschwimmkörpers 1 mittels einer hydrodynamischen Einrichtung 11 erzielt, welche ab dem Zeitpunkt der Trennung des Spulenaufschwimmkörpers 1 vom mobilen Wirkkörper 8 mittels der pyrotechnischen Trennvorrichtung 20 von einer in der Zeichnung dargestellten hydrodynamisch wenig wirksamen Ruheposition in eine hydrodynamisch wirksame Arbeitsposition verbracht wird.

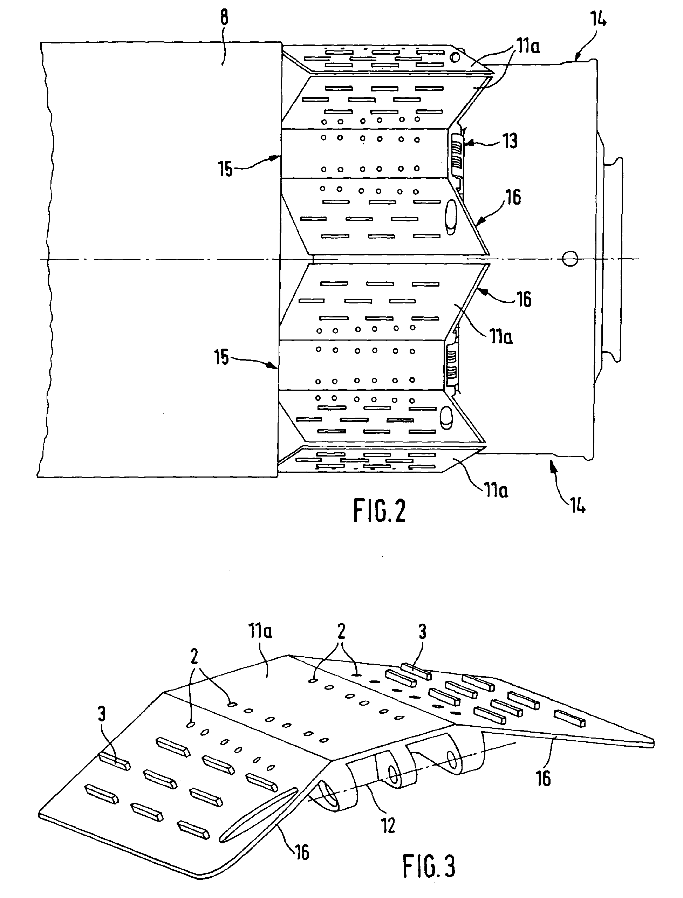

Im Ausführungsbeispiel ist die erfindungsgemäße hydrodynamische wirksame Einrichtung 11 als eine in der Figur 2 dargestellte und aus mehreren flächigen Elementen 11a bestehende Einrichtung ausgeführt. Die Elemente 11a sind über den Umfang der Außenfläche 14 gleichmäßig verteilt angeordnet. Die einzelnen Elemente 11a liegen in der Ruheposition gemäß Figur 2 an der Außenfläche 14 des Spulenaufschwimmkörpers 1 an und werden bis zur Trennung des Spulenaufschwimmkörpers 1 vom mobilen Wirkkörper 8 mit Hilfe einer Halterung 15 in der Form einer Überdeckung des Gehäuses des mobilen Wirkkörpers 8 gehalten. Die lösbare Halterung kann im Rahmen der Erfindung entsprechend den örtlichen Bedingungen und Einbauverhältnissen auch in anderer Form erfolgen.

Nach der Trennung klappen die einzelnen Elemente 11a um die Drehachse 12 getrieben von einer Feder 13 auf bis sie mit ihrem Rand 16 an der Außenfläche 14 des Spulenaufschwimmkörpers 8 anliegen. In dieser Arbeitsstellung sind die Flächen der einzelnen Elemente 11a etwa im rechten Winkel zur Außenfläche 14 angeordnet.

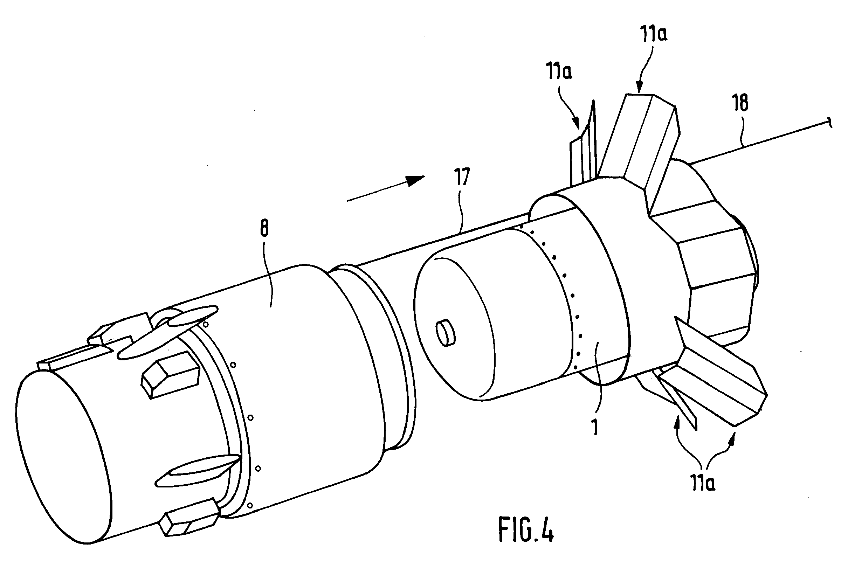

Figur 4 zeigt die Situation kurz nach der Trennung des Spulenaufschwimmkörpers 1 vom Flugkörper 8. Der Lichtleiter 17 verbindet hierbei den Flugkörper 8 mit dem Spulenaufschwimmkörper 1, der seinerseits über den Lichtleiter 18 eine Datenverbindung mit dem nicht dargestellten Unterwasserfahrzeug unterhält. Die Elemente 11a sind bereits über einen Winkel von etwas mehr als 90° aufgeklappt und befinden sich in ihrer Arbeitsstellung. Damit wirken sie stark verzögernd hinsichtlich der Strömung S des umgebenden Wassers.

Eine noch stärkere Verwirbelung der Strömung S und damit eine noch stärkere Verzögerung des Spulenauftriebskörpers 1 relativ zum beschleunigenden Flugkörper 8 wird durch folgende Ausgestaltung der Elemente 11a erreicht. An besonders geeigneten Positionen sind über das gesamte Element 11a verteilt Bohrungen 2 und Rippen 3 angeordnet, mit denen die Verwirbelung der oberflächennahen Strömung an den Elementen 11a gesteigert wird. Die Rippen können auch gleichzeitig zur Erhöhung der mechanischen Stabilität der Elemente 11a vorteilhaft verwendet werden.

Im Rahmen der Erfindung ist es nicht nur möglich, ausklappbare Elemente 11a zu verwenden. Genauso gut lassen beispielsweise radial ausfahrbare gleichwirkende Elemente einsetzen. Als Wirkung wird in jedem Fall eine starke Verzögerung der Bewegung des Spulenauftriebskörpers 1 gegenüber dem umgebenden Wasser erreicht, sowohl bei horizontalen als auch bei vertikalen Bewegungen des Spulenaufschwimmkörpers 1.

## Patentansprüche

1. Hydrodynamische Einrichtung für einen unter der Wasseroberfläche befindlichen Spulenaufschwimmkörper (1), welcher wenigstens eine Lichtwellenleiterspule (7) enthält, wobei das erste Ende des Lichtwellenleiters mit einem Unterwasserfahrzeug verbunden ist und das zweite Ende mit einem sich nach dem Start vom Unterwasserfahrzeug weg bewegenden mobilen Wirkkörper (8) verbunden ist, **dadurch gekennzeichnet, dass** der Spulenaufschwimmkörper (1) wenigstens eine hydrodynamisch wirksame Einrichtung (11) aufweist, welche in der Ruheposition in einer hydrodynamisch wenig wirksamen Position am oder im Spulenaufschwimmkörper (1) angeordnet ist und welche ab dem Zeitpunkt der Trennung des Spulenaufschwimmkörpers (1) vom mobilen Wirkkörper (8) in eine hydrodynamisch wirksame Arbeitsposition verbringbar ist.

2. Hydrodynamische Einrichtung nach Anspruch 1, **dadurch gekennzeichnet, dass** der Übergang der hydrodynamischen Einrichtung (11) von der Ruheposition in die Arbeitsposition mittels eines Antriebs, insbesondere mittels der Kraft einer vorgespannten Feder (13) erfolgt.

3. Hydrodynamische Einrichtung nach Anspruch 1 oder 2, **dadurch gekennzeichnet, dass** die hydrodynamisch wirksame Einrichtung (11) als flächiges Element (11a) ausgeführt ist, welches in der Ruheposition angenähert formschlüssig an der Außenfläche (14) des Spulenaufschwimmkörpers (1) anliegt.

4. Hydrodynamische Einrichtung nach einem der Ansprüche 1 bis 3, **dadurch gekennzeichnet, dass** die hydrodynamisch wirksame Einrichtung (11) Bohrungen und/oder Rippen (5, 6) zur Verwirbelung der Wasserströmung an der Oberfläche der Einrichtung aufweist.

5. Hydrodynamische Einrichtung nach einem der Ansprüche 1 bis 4, **dadurch gekennzeichnet, dass** die hydrodynamisch wirksame Einrichtung (11) mittels einer Verriegelungsvorrichtung (15) in der Ruheposition gehalten wird.

6. Hydrodynamische Einrichtung nach einem der Ansprüche 1 bis 5, **dadurch gekennzeichnet, dass** die Trennung des Spulenaufschwimmkörpers (1) vom mobilen Wirkkörper (8, 19) mittels einer von der Wassertiefe abhängig auslösbaren Trennvorrichtung (20) erfolgt.

7. Hydrodynamische Einrichtung nach Anspruch 6, **dadurch gekennzeichnet, dass** die Trennvorrichtung (20) eine abhängig von einer wählbaren Wassertiefe initiierbare pyrotechnische Vorrichtung zum Trennen des am mobilen Wirkkörper (8, 19) befestigten Spulenauftriebskörper (1) umfasst.
